(19) Europäisches Patentamt
European Patent Office
Office européen des brevets

(11) **EP 1 630 381 B1**

(12) **EUROPÄISCHE PATENTSCHRIFT**

(45) Veröffentlichungstag und Bekanntmachung des Hinweises auf die Patenterteilung:
**01.06.2011 Patentblatt 2011/22**

(51) Int Cl.:
***F02B 27/02*** *(2006.01)*

(21) Anmeldenummer: **04104052.8**

(22) Anmeldetag: **24.08.2004**

(54) **Luftansaugkanalsystem mit in der Länge stufenlos verstellbaren Ansaugkanälen und Verfahren zur Veränderung der Länge derartiger Ansaugkanäle**

Intake system with intake runners being lenght-controllable without steps and method to change the lenght of these intake runners

Système d'admission d'air avec canaux d'admission à longueur à réglage continu et procédé pour changer la longueur de cette canaux d'admission

(84) Benannte Vertragsstaaten:
**DE FR GB**

(43) Veröffentlichungstag der Anmeldung:
**01.03.2006 Patentblatt 2006/09**

(73) Patentinhaber: **Ford Global Technologies, LLC, A subsidary of Ford Motor Company Dearborn, MI 48126 (US)**

(72) Erfinder:
• **Kluge, Torsten**
  **51491 Overath (DE)**
• **Smiljanovski, Vanco**
  **50181 Bedburg (DE)**

(74) Vertreter: **Drömer, Hans-Carsten et al Ford-Werke Aktiengesellschaft Patentabteilung NH/DRP Henry-Ford-Strasse 1 50725 Köln (DE)**

(56) Entgegenhaltungen:
**EP-A- 0 571 894    EP-A- 1 081 370**
**EP-A- 1 167 717    DE-A- 3 807 193**
**DE-A- 19 528 014    GB-A- 769 041**
**US-A- 4 274 368**

• **PATENT ABSTRACTS OF JAPAN Bd. 2003, Nr. 07, 3. Juli 2003 (2003-07-03) & JP 2003 083183 A (GP DAIKYO CORP), 19. März 2003 (2003-03-19)**

**Beschreibung**

Die Erfindung betrifft eine Brennkraftmaschine mit Luftansaugkanalsystem zur drehzahlabhängigen stufenlosen Variation der Länge $l_1$ der einzelnen Ansaugkanäle, die zur Versorgung der Brennkraftmaschine mit Verbrennungsluft bzw. Frischgemisch einerseits zu einem Zylinder der Brennkraftmaschine führen und andererseits in einen Sammelbehälter des Luftansaugkanalsystems münden.

Die deutsche Offenlegungsschrift DE 195 28 014 A1 beschreibt eine Sauganlage für eine Brennkraftmaschine mit Verstellorganen zum Verändern der effektiven Saugrohrlänge. Die Verstellorgane sind als jeweils um eine Achse verdrehbare Abdeckungen ausgebildet. Die DE 195 28 014 A1 beschreibt damit ein Luftansaugkanalsystem, bei dem die Saugrohrlänge mittels eines drehbaren Rotationskörpers variiert wird.

Die europäische Patentanmeldung EP 0 571 894 A1 hat ein Luftansaugkanalsystem zum Gegenstand, bei dem die Länge des zu einem Zylinder einer Brennkraftmaschine führenden Ansaugkanals variiert wird, indem die - in einem Sammelbehälter platzierte - Eintrittsöffnung dieses Ansaugkanals durch Verschwenken eines Kanalendsegments verändert, d.h. vergrößert bzw. verkleinert wird.

Die intermittierende Verbrennung einer herkömmlichen 4-Takt-Hubkolben-Brennkraftmaschine führt zusammen mit dem mittels Ventilen gesteuerten Ladungswechsel sowohl im Ansaugtrakt als auch im Abgastrakt zu sehr ungleichförmigen dynamischen Strömungsvorgängen der jeweiligen gasförmigen Medien, nämlich der Verbrennungsluft bzw. des Frischgemisches einerseits und den Abgasen andererseits.

Während des Ladungswechsels werden die heißen Abgase durch die Auslaßöffnungen des Brennraums in den Abgastrakt ausgeschoben und frische Verbrennungsluft gegebenenfalls zusammen mit bereits eingespritztem Kraftstoff wird über die Einlaßöffnungen des Brennraums aus dem Ansaugtrakt angesaugt. Der Druck des gasförmigen Mediums variiert dabei entlang des Strömungsweges im Abgasrohr bzw. Ansaugkanal. Derartige lokale Druckstörungen breiten sich in gasförmigen Medien als Wellen aus, idealerweise als sinusförmige Wellen.

Eine sich mit Schallgeschwindigkeit ausbreitende Welle wird am Ende des Abgasrohres bzw. des Ansaugkanals reflektiert. Dabei ergeben sich für offene und geschlossene Rohrenden unterschiedliche Reflexionsbedingungen. Während eine Überdruckwelle an einem geschlossenen Rohrende als Überdruckwelle reflektiert wird, kommt es an einem offenen Rohrende zu einer Phasenverschiebung von 180°. Dies führt dazu, daß eine am offenen Rohrende ankommende Unterdruckwelle als Überdruckwelle reflektiert wird. Entsprechend wird eine Überdruckwelle an einem offenen Rohrende als Unterdruckwelle reflektiert. Die Strömung im Rohr ergibt sich dann aus der Überlagerung der vorlaufenden und reflektierten Welle.

Diese dynamischen Wellenvorgänge im Ansaug- bzw. Abgastrakt werden nach dem Stand der Technik zur Optimierung des Ladungswechsels genutzt. Um diese Effekte für die Optimierung des Ladungswechsels nutzbar zu machen, kann beispielsweise die Länge des Abgasrohres so gewählt werden, daß die beim Öffnen des Auslaßventils in das Abgasrohr entlassene Drucküberhöhung am offenen Rohrende reflektiert wird und die reflektierte Unterdruckwelle an der Auslaßöffnung des Brennraums ankommt kurz bevor das Auslaßventil schließt, so daß der zusätzliche Unterdruck die Evakuierung des Brennraums d. h. das durch den Kolben initiierte Ausschieben der Abgase unterstützt.

Andererseits kann der Ansaugtrakt in der Art ausgelegt werden, daß gegen Ende des Ansaugtaktes an der Einlaßöffnung eine Überdruckwelle ankommt, die zu einer Verdichtung und damit zu einem gewissen Nachladeeffekt führt. Die hierzu erforderliche Überdruckwelle wird durch Reflexion der zu Beginn des Ansaugens - wenn das Einlaßventil öffnet - in das Ansaugrohr bzw. in den Ansaugkanal entlassenen Unterdruckwelle am offenen Ende des Ansaugkanals generiert. Hierzu muß wiederum der Ansaugkanal in seiner Länge abgestimmt werden.

In der Praxis erweist es sich aber als schwierig, die beschriebenen Effekte für die Optimierung des Ladungswechsels nutzbar zu machen, da die zur Erzielung des Nachladeeffektes erforderliche Länge $l_1$ des Ansaugkanals von der Drehzahl der Brennkraftmaschine abhängt. Näherungsweise gilt für die Länge $l_1$ des abgestimmten Ansaugkanals:

$$l_1 \approx a/6n$$

bzw.

$$l_1 \sim 1/n$$

mit a als Schallgeschwindigkeit und n als Drehzahl.

Daher wirkt sich eine Saugrohrabstimmung nur in einem sehr begrenzten Drehzahlbereich vorteilhaft aus, wobei bei hohen Drehzahlen ein eher kurzes Saugrohr und bei niedrigen Drehzahlen ein längeres Saugrohr erforderlich ist.

Um die beschriebenen Effekte dennoch - zumindest für die Optimierung des Ansaugvorganges - nutzbar zu machen, werden nach dem Stand der Technik verschiedene Konzepte vorgeschlagen.

Die US 2003/0233992 A1 beschreibt ein Luftansaugkanalsystem, bei dem in einem Sammelbehälter ein Halbrohrstück drehbar gelagert ist und zwischen zwei Positionen schaltbar ist. In einer ersten Position bildet dieses erste bewegliche Halbrohrstück zusammen mit einem zweiten ortsfesten Halbrohrstück, welches in eine Außenwand des Sammelbehälters eingearbeitet ist, einen Ansaugeintrittskanal, der als Verlängerung des eigentlichen in den Sammelbehälter mündenden Ansaugkanals dient. In der ersten Position weist der Ansaugkanal, der in dieser Position den Ansaugeintrittskanal mitumfaßt, seine maximale Gesamtlänge $l_{1,max}$ auf.

Durch Verdrehen des ersten Halbrohrstücks wird der in der ersten Position von den beiden Halbrohrstücken gebildete Ansaugeintrittskanal gewissermaßen zerlegt bzw. geöffnet, wobei die Gesamtlänge des Ansaugkanals dadurch um die Länge des dann nicht mehr vorhandenen Ansaugeintrittskanals reduziert wird. Folglich weist der Ansaugkanal in der zweiten Position seine minimale Länge $l_{1,min}$ auf.

Das in der US 2003/0233992 A1 beschriebene Luftansaugkanalsystem verfügt damit über sogenannte schaltbare Ansaugkanäle, die zwischen zwei verschiedenen Saugrohrlängen umgeschaltet werden können. Dadurch verfügen derartige Luftansaugkanalsystem sowohl über einen kurzen Ansaugkanal für hohe Drehzahlen als auch über einen längeren Ansaugkanal für niedrige Drehzahlen.

Ein schaltbarer Ansaugkanal läßt aber keine stufenlose Verstellung der Länge des Ansaugkanals zu, weshalb der Vorteil derartiger Systeme gegenüber herkömmlichen Ansaugkanälen mit unveränderlichen Kanallängen nur gering ist. Damit zeigt die US 2003/0233992 A1 kein Luftansaugkanalsystem der gattungsbildenden Art d.h. kein Luftansaugkanalsystem gemäß dem Oberbegriff des Anspruchs 1.

Ein weiterer Lösungsansatz nach dem Stand der Technik besteht deshalb in Luftansaugkanalsystem mit stufenlos in der Länge verstellbaren Ansaugkanälen.

Ein derartiges gattungsbildendes Luftansaugkanalsystem wird beispielsweise in der US 2003/0177996 A1 beschrieben. Bei diesem Luftansaugkanalsystem sind die Ansaugkanäle mehrteilig d.h. modular in der Art aufgebaut, daß ein erstes bewegliches Teilrohrstück teleskopartig in ein zweites ortsfestes Teilrohrstück eingreift und in diesem zweiten Teilrohrstück verschiebbar gelagert ist. Durch Verschieben des ersten Teilrohrstückes, was durch ein Zusammenwirken von Zahnrädern und Zahnstangen bewerkstelligt werden kann, wird die Länge des Ansaugkanals stufenlos verstellt und der jeweiligen Drehzahl angepaßt.

Ein derartiges System ist aber komplex und daher störanfällig und kostenintensiv. Des Weiteren sind große Verstellwege erforderlich, um spürbare Längenveränderungen des Ansaugkanals hervorzurufen. Große Verstellwege sind aber insbesondere im Hinblick auf die für die Saugrohrvariation erforderliche Beschleunigung des Teilrohrstücks als nachteilig anzusehen. Insbesondere die in der US 2003/0177996 A1 beschriebene Ausführungsform, bei der zwei kreissegmentförmige Teilrohrstücke ineinander gedreht werden, um die Länge des Ansaugkanals zu vergrößern bzw. zu verkleinern, induziert hohe Zentripetalkräfte, da die zu bewegenden Rohrmassen weit vom Drehpunkt der Bewegung entfernt sind. Als kritisch sind derartige Systeme insbesondere im Hinblick auf den für die Praxis relevanten Betrieb der Brennkraftmaschine im Stadtverkehr anzusehen, bei dem häufig schnelle und große Drehzahländerungen auftreten, die eine ununterbrochene und schnelle Abstimmung der Ansaugkanallänge an die aktuelle Drehzahl erfordern, was mit hohen Beschleunigungen und entsprechend großen Massenkräften verbunden ist.

Von der Kinematik ähnliche Luftansaugkanalsysteme werden in den beiden deutschen Offenlegungsschriften DE 197 56 332 A1 und DE 198 30 508 A1 beschrieben. Dabei werden zwar keine Teilrohrstücke teleskopartig ineinander geschoben, um die Länge der Ansaugkanäle zu variieren. Der Ansaugkanal ist aber ebenfalls gekrümmt bzw. spiralförmig ausgebildet und die stufenlose Variation des Ansaugkanals erfolgt wiederum durch ein Verdrehen von Bauteilen.

Jeder Ansaugkanal führt einerseits zu einem Zylinder der Brennkraftmaschine und mündet anderseits über eine Eintrittsöffnung in einen Sammelbehälter des Ansaugtraktes. Durch ein Verdrehen der Eintrittsöffnung in eine andere Position wird die Länge des Ansaugkanals vergrößert bzw. verkleinert. Nachteilig an diesen Luftansaugkanalsystemen sind wiederum die großen Verstellwege d.h. die großen Verdrehwinkel um eine Variation bzw. Abstimmung der Saugrohrlänge im gesamten Drehzahlbereich zu gewährleisten. Diese großen Verdrehwinkel führen, insbesondere im Stadtverkehr, zusammen mit den notwendigen hohen Winkelbeschleunigungen zu großen Massenkräften. Darüber hinaus sind auch diese Systeme sehr komplex und kostenintensiv.

Vor diesem Hintergrund ist es die Aufgabe der vorliegenden Erfindung, eine Brennkraftmaschine gemäß dem Oberbegriff des Anspruchs 1 zur drehzahlabhängigen stufenlosen Variation der Länge $l_1$ der einzelnen Ansaugkanäle bereitzustellen, mit dem die nach dem Stand der Technik bekannten Nachteile überwunden werden, und die insbesondere - im Vergleich zu herkömmlichen Systemen nach dem Stand der Technik - nur geringe Verstellwege bzw. Verstellwinkel aufweist bzw. erforderlich macht, um eine Abstimmung der Saugrohrlänge im gesamten Drehzahlbereich zu gewährleisten.

Gelöst wird diese Aufgabe durch eine Brennkraftmaschine mit Luftansaugkanalsystem zur drehzahlabhängigen stufenlosen Variation der Länge $l_1$ der einzelnen Ansaugkanäle, die zur Versorgung der Brennkraftmaschine mit Verbrennungsluft bzw. Frischgemisch einerseits zu einem Zylinder der Brennkraftmaschine führen und andererseits in einen Sammelbehälter des Luftansaugkanalsystems münden, und die dadurch gekennzeichnet ist, dass im Sammelbehälter eine um eine Drehachse verschwenkbare Leiteinrichtung angeordnet ist, wobei

- die Drehachse der Leiteinrichtung an der einer Austrittsöffnung des Sammelbehälters zugewandten Seite der Leiteinrichtung angeordnet ist, und

- die der Strömung zugewandte Seite der Leiteinrichtung zusammen mit mindestens einer weiteren im Sammelbehälter vorgesehenen ortsfesten Wandung einen in der Länge $l_2$ variablen Ansaugeintrittskanal ausbildet, so dass durch Verschwenken der Leiteinrichtung die Länge $l_2$ des variablen Ansaugeintrittskanals und damit die Gesamtlänge $l_1$ des Ansaugkanals stufenlos verstellbar ist.

Erfindungsgemäß wird im Sammelbehälter mittels einer beweglichen Leiteinrichtung und ortsfesten Wandungen ein in der Länge variabler Ansaugeintrittskanal ausgebildet. Dadurch ist das einzelne Ansaugrohr im Gegensatz zu stufenweise schaltbaren Saugrohren stufenlos drehzahlabhängig verstellbar. Die angesaugte Verbrennungsluft bzw. das angesaugte Frischgemisch wird dem Sammelbehälter entnommen und tritt in den variablen Ansaugeintrittskanal ein. Der Ansaugeintrittskanal wird durchströmt, wobei die Strömung von den ortsfesten Wandungen und der Leiteinrichtung bis zur Austrittsöffnung des Sammelbehälters geführt wird. Ausgehend von der Austrittsöffnung schließt sich stromabwärts das nicht verstellbare Teilstück des Ansaugkanals an, so daß sich die Gesamtlänge $l_1$ des Ansaugkanals aus der Länge dieses nicht verstellbaren Teilstückes und der Länge $l_2$ des variablen Ansaugeintrittskanals zusammensetzt.

Dadurch, daß erfindungsgemäß die Länge $l_2$ des variablen Ansaugeintrittskanals durch Verschwenken der Leiteinrichtung variiert wird, kann die Gesamtlänge $l_1$ des einzelnen Ansaugkanals durch Verschwenken der Leiteinrichtung verstellt werden.

Soll das Saugrohr bzw. der Ansaugkanal verkürzt werden, wird der Ansaugeintrittskanal durch Verschwenken der Leiteinrichtung weiter geöffnet d.h. die Leiteinrichtung wird in der Art verschwenkt, daß sich die Strömungsquerschnitte des Ansaugeintrittskanals, die durch die Leiteinrichtung und die ortsfesten Wandungen begrenzt werden, in Richtung Eintritt in den Ansaugeintrittskanal zunehmend vergrößern.

Die Vergrößerung der Strömungsquerschnitte hat zwei Effekte zur Folge. Zum einen wird die während des Ladungswechsels von den Einlaßöffnungen der einzelnen Zylinder kommende Unterdruckwelle durch Verkürzung des Ansaugkanals früher reflektiert, was bei steigender Drehzahl zielführend ist. Zum anderen kann durch die Vergrößerung des Strömungsquerschnittes die Zylinderfüllung bei hohen Drehzahlen verbessert werden, da größere Strömungsquerschnitte einen geringeren Strömungswiderstand für die dann benötigten Luft- bzw. Frischgemischmassen darstellen.

Ausgehend von der vollständig geöffneten Stellung der Leiteinrichtung kann der Ansaugkanal verlängert werden, indem der Ansaugeintrittskanal durch Verschwenken der Leiteinrichtung weiter geschlossen wird d. h. die Leiteinrichtung wird in der Art verschwenkt, daß sich die Strömungsquerschnitte des Ansaugeintrittskanals in Richtung Eintritt in den Ansaugeintrittskanal verkleinern.

Die Verkleinerung der Strömungsquerschnitte hat zwei Effekte zur Folge. Zum einen wird die während des Ladungswechsels von den Einlaßöffnungen der einzelnen Zylinder kommende Unterdruckwelle durch Verlängerung des Ansaugkanals später reflektiert, was bei abnehmender Drehzahl zielführend ist. Zum anderen kann durch eine weitere Verkleinerung des Strömungsquerschnittes die Amplitude der reflektierten Überdruckwelle beeinflußt werden. Denn während die Laufzeit der Druckwelle im Ansaugrohr von der Länge des Ansaugrohres abhängt, wird die Amplitude der Druckwelle durch den Querschnitt des Ansaugrohres bestimmt, wobei mit abnehmendem Strömungsquerschnitt die Strömungsgeschwindigkeit zunimmt, wodurch die Amplitude zunimmt. Auf diese Weise kann auch bei niedrigen Drehzahlen eine hohe Druckamplitude für einen ausreichenden Nachladeeffekt erzielt werden.

Wesentlich ist aber, dass mit dem erfindungsgemäßen Luftansaugkanalsystem bereits durch Verschwenken der Leiteinrichtung um kleine Verstellwinkel $\alpha$ eine Abstimmung des Ansaugrohres im gesamten Drehzahlbereich ermöglicht wird.

Somit wird durch die erfindungsgemäße Brennkraftmaschine die der Erfindung zugrunde liegende Aufgabe gelöst, nämlich eine Brennkraftmaschine mit Luftansaugkanalsystem bereitzustellen, das im Vergleich zu herkömmlichen Systemen nur kleine Verstellwinkel zur Abstimmung der Saugrohrlänge im gesamten Drehzahlbereich erforderlich macht.

Hierdurch können die im Rahmen der Saugrohrabstimmung auftretenden Winkelbeschleunigungen und die durch diese Beschleunigungen hervorgerufenen Massenkräfte deutlich reduziert werden, was sich insbesondere im Stadtverkehr positiv bemerkbar macht, bei dem in der Regel häufig größere Drehzahlschwankungen auftreten.

Ein zur Verstellung des Saugrohrs bzw. der Leiteinrichtung vorzusehender Aktuator kann daher eine geringere Leistung aufweisen als bei herkömmlichen Luftansaugkanalsystemen üblich. Die Belastung der Bauteile, insbesondere die Belastung der für die beweglichen Bauteile vorzusehenden Lager, nimmt ab.

Weitere vorteilhafte Ausgestaltungen der Brennkraftmaschine werden im Zusammenhang mit den Unteransprüchen erläutert. Dabei wird auch sichtbar werden, welche Möglichkeiten das erfindungsgemäße Luftansaugkanalsystem über die oben bereits dargelegten Vorteile hinaus eröffnet.

Vorteilhaft sind Ausführungsformen der Brennkraftmaschine, bei denen die Leiteinrichtung zwischen einer ersten Arbeitsposition, in der der Ansaugkanal eine maximale Länge $l_{1,max}$ aufweist, und einer zweiten Arbeitsposition, in der der Ansaugkanal eine minimale Länge $l_{1,min}$ aufweist, verschwenkbar ist, wobei die Leiteinrichtung beim Wechsel von der ersten Arbeitsposition in die zweite Arbeitsposition einen Winkel $\alpha$ überstreicht

mit α < 90°. Die erste Arbeitsposition entspricht der bereits weiter oben beschriebenen geschlossenen Stellung der Leiteinrichtung, wohingegen die zweite Arbeitsposition der vollständig geöffneten Stellung der Leiteinrichtung entspricht.

Vorteilhaft sind insbesondere Ausführungsformen der Brennkraftmaschine, bei denen gilt α < 60°, vorzugsweise α < 45° bzw. α < 30°. Je kleiner die zur Abstimmung des Saugrohres erforderlichen Verstellwinkel sind, desto kleiner sind die zum Verstellen erforderlichen Kräfte und die durch die Verstellung hervorgerufenen Massenkräfte. Im Rahmen der Figurenbeschreibung wird ein Luftansaugkanalsystem erläutert, daß mit einem Verstellwinkel α < 30 ° betrieben wird. Die Größe des Verstellwinkels hängt im Wesentlichen von der Gestalt der Leiteinrichtung ab. Verfügt die Leiteinrichtung über eine ausreichend lange Grundform, können bereits mit geringen Verstellwinkeln große Längenänderungen des Saugrohres erzielt werden, so dass bereits mit kleinen Verstellwinkeln der gesamte Drehzahlbereich abgedeckt werden kann.

Daher sind Ausführungsformen der Brennkraftmaschine vorteilhaft, bei denen die Leiteinrichtung eine im Wesentlichen längliche Grundform aufweist.

Vorteilhaft sind ebenfalls Ausführungsformen der Brennkraftmaschine, bei denen die Drehachse der Leiteinrichtung im Bereich einer Austrittsöffnung des Sammelbehälters angeordnet ist. Dadurch bildet der variable Ansaugeintrittskanal im Wesentlichen den Ansaugkanal stromaufwärts der Austrittsöffnung und der stromabwärts der Austrittsöffnung befindliche Kanalbereich im Wesentlichen das nicht verstellbare Teilstück des Ansaugkanals.

In der vollständig geöffneten Position der Leiteinrichtung ist nahezu kein Ansaugeintrittskanal mehr vorhanden und die von der Einlaßöffnung der Zylinder kommende Unterdruckwelle wird bereits im Bereich der Austrittsöffnung des Sammelbehälters reflektiert.

Vorteilhaft sind Ausführungsformen der Brennkraftmaschine, bei denen die der Strömung zugewandte Seite der Leiteinrichtung gekrümmt ist, wobei die der Strömung zugewandte Seite der Leiteinrichtung vorzugsweise konvex ausgebildet ist. Die mindestens eine weitere ortsfeste Wandung, die zusammen mit der Leiteinrichtung zur Ausbildung des Ansaugeintrittskanals vorgesehen wird, weist dabei vorzugsweise eine zu der konvexen Seite der Leiteinrichtung korrespondierende Gestalt auf. Durch diese Ausgestaltung der der Strömung zugewandten Kanalwände wird die Strömung weitestgehend verlustfrei durch den Ansaugeintrittskanal geleitet bzw. geführt, wobei eine Strömungsablösung und Turbulenzen weitestgehend vermieden werden.

Vorteilhaft sind Ausführungsformen der Brennkraftmaschine, bei denen die Leiteinrichtung als Hohlkörper ausgebildet ist. Vorteilhaft ist diese Ausführungsform, weil eine hohle Leiteinrichtung ein geringes Eigengewicht aufweist, wodurch die bewegten bzw. zu bewegenden Massen reduziert werden, was sich günstig hinsichtlich der Verstellkräfte und der durch die Verstellung hervorgerufenen Massenkräfte auswirkt.

Vorteilhaft sind Ausführungsformen der Brennkraftmaschine, bei denen die Leiteinrichtung mittels der Motorsteuerung drehzahlabhängig steuerbar bzw. verschwenkbar ist. Wie bereits erwähnt ist die Abstimmung des Saugrohres und damit das Verschwenken der Leiteinrichtung drehzahlabhängig vorzunehmen. Die Motorsteuerung einer Brennkraftmaschine ist üblicherweise mit einem Kurbelwellensensor verbunden, der Informationen über die Stellung der Kurbelwelle als Eingangssignal an die Motorsteuerung liefert.

Der ortsfeste, an der Brennkraftmaschine angeordnete Kurbelwellensensor greift dabei Signale von einem Ring oder Zahnkranz ab, der mit der Kurbelwelle umläuft und beispielsweise am Schwungrad vorgesehen werden kann. Das vom Kurbelwellensensor erzeugte Signal wird von der Motorsteuerung zur Berechnung der Drehzahl und der Winkelstellung der Kurbelwelle benötigt. Diese Daten benötigt die Motorsteuerung beispielsweise für die Berechnung der Zündeinstellung, der Kraftstoffeinspritzung und der Kraftstoffmenge unter sämtlichen Betriebsbedingungen der Brennkraftmaschine, wobei die Kenntnis der Drehzahl die wichtigste Information ist, die mit Hilfe des Kurbelwellensensors generiert wird. Diese der Motorsteuerung bereits bekannte Information über die Drehzahl kann zusammen mit einem in der Motorsteuerung für die Saugrohrabstimmung abgelegten Kennfeld, das den Zusammenhang zwischen abgestimmter Saugrohrlänge und Drehzahl wiedergibt, zur Steuerung der Leiteinrichtung verwendet werden.

Vorteilhaft sind Ausführungsformen der Brennkraftmaschine, bei denen eine Außenwand des Sammelbehälters die mindestens eine weitere im Sammelbehälter vorgesehene ortsfeste Wandung bildet. Die Integration der mindestens einen weiteren Wandung in die Außenwand des Sammelbehälters reduziert die Anzahl der Bauteile, indem bereits vorhandene Begrenzungswände bzw. Begrenzungsflächen genutzt werden bzw. diesen Begrenzungswände eine Doppelfunktion zugewiesen wird, nämlich einerseits den Sammelbehälter zu formen und andererseits den variablen Ansaugeintrittskanal auszubilden. Dies führt nicht nur zu einer Gewichtsreduzierung des Luftansaugkanalsystems, sondern darüber hinaus auch zu einer Absenkung der Herstellungskosten, da die mindestens eine weitere Wandung bereits bei der Fertigung des Sammelbehälters berücksichtigt d.h. integriert werden kann.

Vorteilhaft sind Ausführungsformen der Brennkraftmaschine, bei denen der durch die Leiteinrichtung und der mindestens einen weiteren ortsfesten Wandung gebildete Ansaugeintrittskanal einen im Wesentlichen rechteckförmigen Strömungsquerschnitt aufweist. Ein derartiger Querschnitt ermöglicht einfachere, weniger komplexe Bauteilstrukturen bzw. Bauteilgeometrien, insbesondere der Leiteinrichtung und des Sammelbehälters.

Vorteilhaft sind insbesondere Ausführungsformen der Brennkraftmaschine, bei denen der durch die Leiteinrichtung und der mindestens einen weiteren ortsfesten Wandung gebildete Ansaugeintrittskanal einen im Wesentlichen ovalen Strömungsquerschnitt aufweist. Ein ovaler Querschnitt weist strömungstechnische Vorteile auf.

Vorteilhaft sind Ausführungsformen der Brennkraftmaschine, bei denen jeder Zylinder der Brennkraftmaschine einen Ansaugkanal mit einem separaten Sammelbehälter und mit einer in diesem Sammelbehälter angeordneten Leiteinrichtung aufweist. Dadurch werden die einzelnen Zylinder bzw. die einzelnen Ansaugkanäle entkoppelt. Die durch die einzelnen Ansaugkanäle angesaugten Strömungen können sich dabei nicht gegenseitig nachteilig beeinflussen. Insbesondere kann der jeweilige Zylinder nur über den seinem separaten Ansaugkanal zugeordneten Sammelbehälter ansaugen. Ein Ansaugen von Luft bzw. Frischgemisch aus einem anderen Ansaugkanal wird unterbunden.

Vorteilhaft sind aber auch Ausführungsformen der Brennkraftmaschine, bei denen die Ansaugkanäle der n Zylinder aufweisenden Brennkraftmaschine in einen Gesamtsammelbehälter münden, in dem eine Leiteinrichtung oder n Leiteinrichtungen vorgesehen sind. Im Gegensatz zu der zuvor beschriebenen Ausführungsform wird nur ein Sammelbehälter benötigt. Dieser eine Sammelbehälter muß dann aber in der Art ausgebildet werden, daß die einzelnen Ansaugkanäle während der zeitlich versetzten Ladungswechsel nicht miteinander kommunizieren können, was durch eingebrachte Trennwände erreicht wird.

Ein Verfahren zur stufenlosen drehzahlabhängigen Variation der Länge $l_1$ der einzelnen Ansaugkanäle eines Luftansaugkanalsystems einer Brennkraftmaschine, bei der die Ansaugkanäle einerseits zu einem Zylinder führen und andererseits in einen Sammelbehälter des Luftansaugkanalsystems münden, ist dadurch gekennzeichnet, dass

- im Sammelbehälter eine um eine Drehachse verschwenkbare Leiteinrichtung vorgesehen wird, deren Drehachse im Bereich einer Austrittsöffnung des Sammelbehälters angeordnet ist, und
- mittels der der Strömung zugewandten Seite der Leiteinrichtung und mindestens einer weiteren im Sammelbehälter vorgesehnen ortsfesten Wandung ein in der Länge $l_2$ variabler Ansaugeintrittskanal ausgebildet wird, und
- die Leiteinrichtung zwischen einer ersten Arbeitsposition, in der der Ansaugkanal eine maximale Länge $l_{1,max}$ aufweist, und einer zweiten Arbeitsposition, in der der Ansaugkanal eine minimale Länge $l_{1,min}$ aufweist, verschwenkt wird, wobei durch Verschwenken der Leiteinrichtung die Länge $l_2$ des variablen Ansaugeintrittskanals und damit die Gesamtlänge $l_1$ des Ansaugkanals stufenlos verstellt wird.

Das für die erfindungsgemäße Brennkraftmaschine Gesagte gilt auch für das Verfahren.

Vorteilhaft sind dabei Ausführungsformen des Verfahrens, bei denen mit zunehmender Drehzahl die Leiteinrichtung in der Art verschwenkt wird, dass die Länge $l_2$ des variablen Ansaugeintrittskanals und damit die Gesamtlänge $l_1$ des Ansaugkanals abnimmt. Diese Verfahrensvariante trägt dem Umstand Rechnung, dass mit steigender Drehzahl kleinere Saugrohrlängen benötigt werden, um einen ausreichenden Nachladeeffekt zu erzielen.

Vorteilhaft sind daher auch Ausführungsformen des Verfahrens, bei denen mit abnehmender Drehzahl die Leiteinrichtung in der Art verschwenkt wird, dass die Länge $l_2$ des variablen Ansaugeintrittskanals und damit die Gesamtlänge $l_1$ des Ansaugkanals zunimmt, da niedrigere Drehzahlen längere Saugrohre benötigen.

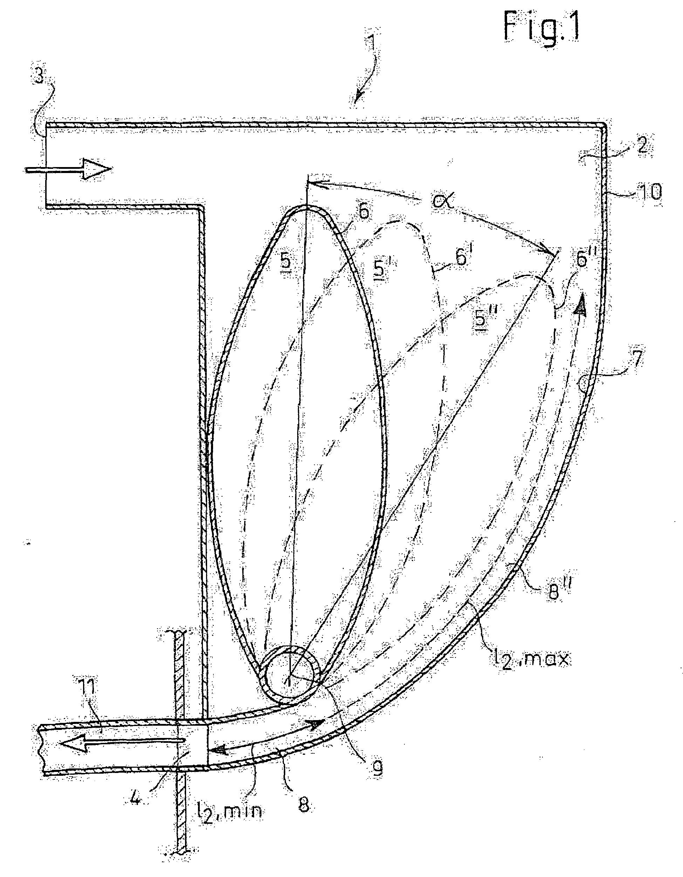

Im Folgenden wird die Erfindung anhand eines Ausführungsbeispieles gemäß der Figur 1 näher beschrieben. Hierbei zeigt:

Fig. 1      schematisch eine erste Ausführungsform im Schnitt.

Figur 1 zeigt schematisch ein Luftansaugkanalsystem 1 für eine Brennkraftmaschine im Schnitt. Dieses Luftansaugkanalsystem 1 verfügt über einen Sammelbehälter 2, in den zur Versorgung der Brennkraftmaschine Verbrennungsluft bzw. Frischgemisch über die Eintrittsöffnung 3 eintritt, um anschließend nach Durchlaufen eines in der Länge veränderlichen Ansaugeintrittskanals 8, 8" den Sammelbehälter 2 über die Austrittsöffnung 4 zu verlassen.

Der Sammelbehälter 2 ist im Bereich der Austrittsöffnung 4 am Zylinderkopf der Brennkraftmaschine befestigt. Nach Durchlaufen des in der Länge veränderlichen Ansaugeintrittskanals 8, 8" wird die Strömung stromabwärts in ein in der Länge nicht verstellbares Teilstück 11 des Ansaugkanals geleitet und verläßt den Sammelbehälter 2 durch die Austrittsöffnung 4. Die Gesamtlänge $l_1$ des Ansaugkanals ergibt sich aus der Summe der Länge dieses nicht verstellbaren Teilstücks 11 und der Länge $l_2$ des variablen Ansaugeintrittskanals 8, 8". Das nicht verstellbare Teilstück 11 führt einerseits durch den Zylinderkopf hindurch zu einem Zylinder der Brennkraftmaschine und mündet mit seinem anderen Ende in den Sammelbehälter 2.

Zur Ausbildung des variablen Ansaugeintrittskanals 8, 8" ist im Sammelbehälter 2 eine Leiteinrichtung 5, 5', 5" angeordnet, die um eine Drehachse 9 verschwenkbar ist, wobei die Drehachse 9 der Leiteinrichtung 5, 5', 5" im Bereich der Austrittsöffnung 4 des Sammelbehälters 2 angeordnet ist.

Bei der in Figur 1 dargestellten Ausführungsform ist die Leiteinrichtung 5,5'5" in drei verschiedenen Positionen gezeigt, um die Arbeitsweise des erfindungsgemäßen Luftansaugkanalsystems 1 bzw. des erfindungsgemäßen Verfahrens ausführlich beschreiben zu können. Dabei ist die in der vollständig geöffneten Stellung befindliche Leiteinrichtung mit dem Bezugszeichen 5 kenntlich gemacht. Das Bezugszeichen 5' kennzeichnet die Leiteinrichtung in einer Zwischenstellung, wohingegen das Bezugszeichen 5" die Leiteinrichtung in einer geschlossenen Stellung bezeichnet.

Die der Strömung zugewandte Seite 6, 6', 6" der Leiteinrichtung 5, 5', 5" bildet jeweils zusammen einer weiteren im Sammelbehälter 2 vorgesehenen ortsfesten Wandung 7 den in der Länge $l_2$ variablen Ansaugeintrittskanal 8, 8". Bei der dargestellten Ausführungsform ist diese ortsfeste Wandung 7 gleichzeitig eine Außenwand 10 des Sammelbehälters 2 bzw. in diese Außenwand 10 integriert.

Durch Verschwenken der Leiteinrichtung 5, 5', 5" kann die Länge $l_2$ des variablen Ansaugeintrittskanals 8, 8" und damit die Gesamtlänge $l_1$ des Ansaugkanals stufenlos verstellt werden.

Soll der Ansaugkanal auf hohe Drehzahlen abgestimmt werden, muß der Ansaugkanal verkürzt werden. Hierzu wird der Ansaugeintrittskanal 8, 8" durch Verschwenken der Leiteinrichtung 5, 5', 5" geöffnet d.h. die Leiteinrichtung 5, 5', 5" wird in der Art verschwenkt, daß sich die Strömungsquerschnitte des Ansaugeintrittskanals 8, 8", die durch die Leiteinrichtung 5, 5', 5" und die ortsfesten Wandungen 7 gebildet werden, in Richtung Eintritt in den Ansaugeintrittskanal 8, 8" vergrößern. Der Abstand zwischen der der Strömung zugewandten Seite 6, 6', 6" der Leiteinrichtung 5, 5', 5" und der ortsfesten Wandung 7 wird vergrößert.

In der vollständig geöffneten Position der Leiteinrichtung 5 weist der Ansaugeintrittskanal 8 seine minimale Länge $l_{2,min}$ auf, die als durchgezogener Doppelpfeil kenntlich gemacht ist. Damit weist auch der Ansaugkanal seine minimale Gesamtlänge $l_{1,min}$ auf.

Die Vergrößerung der Strömungsquerschnitte hat zur Folge, daß die von den Einlaßöffnungen der einzelnen Zylinder kommende Unterdruckwelle früher reflektiert wird, nämlich am Eintritt in den Ansaugeintrittskanal 8, der bei vollständig geöffneter Leiteinrichtung 5 im Bereich der Drehachse 9 bzw. der Austrittsöffnung 4 liegt.

Ausgehend von der vollständig geöffneten Stellung der Leiteinrichtung 5 kann der Ansaugkanal verlängert werden, indem der Ansaugeintrittskanal 8,8" durch Verschwenken der Leiteinrichtung 5 weiter geschlossen wird d.h. die Leiteinrichtung 5 wird in der Art verschwenkt, daß sich die Strömungsquerschnitte des Ansaugeintrittskanals 8, 8" verkleinern.

Dieses Verschwenken bewirkt, daß die von den Einlaßöffnungen der einzelnen Zylinder kommende Unterdruckwelle durch Verlängerung des Ansaugeintrittskanals 8, 8" bzw. des Ansaugkanals später reflektiert wird, was bei abnehmender Drehzahl zur Optimierung des Nachladeeffekts erforderlich ist.

Die Leiteinrichtung 5, 5', 5" kann zwischen einer ersten Arbeitsposition, in der der Ansaugeintrittskanal 8" seine maximale Länge $l_{2,max}$ aufweist , und einer zweiten Arbeitsposition, in der der Ansaugeintrittskanal 8 seine minimale Länge $l_{2,min}$ aufweist, verschwenkt werden, wobei die Leiteinrichtung 5, 5', 5" beim Wechsel von der ersten Arbeitsposition in die zweite Arbeitsposition einen Winkel $\alpha <$ 30 ° überstreicht. Die maximale Länge $l_{2,max}$ des Ansaugeintrittskanals 8" in der ersten Arbeitsposition der Leiteinrichtung 5" ist als gestrichelter Doppelpfeil kenntlich gemacht.

Die Leiteinrichtung 5, 5', 5" kann grundsätzlich über die in der Figur 1 dargestellte Position 5" hinaus verschwenkt werden. Durch dieses weitere Verschwenken wird der Ansaugeintrittskanal 8, 8" weiter geschlossen, der Strömungsquerschnitt nimmt weiter ab und die Strömungsgeschwindigkeit nimmt zu, wodurch die Amplitude der Überdruckwelle gesteigert werden kann. Auf diese Weise kann auch bei niedrigen Drehzahlen eine hohe Druckamplitude für einen ausreichenden Nachladeeffekt erzielt werden.

Bei der in der Figur 1 dargestellten Ausführungsform weist sowohl die der Strömung zugewandte Seite 6, 6', 6" der Leiteinrichtung 5, 5', 5" als auch die ortsfeste Wandung 7 eine konvexe Krümmung auf, was als günstig im Hinblick auf die Strömungsführung zu beurteilen ist. Die Leiteinrichtung 5, 5', 5" ist als Hohlkörper ausgeführt und verfügt über eine im wesentlichen längliche Grundform, was große Längenveränderungen des Ansaugkanals bei nur kleinen Verstellwinkeln $\alpha$ gewährleistet.

**Bezugszeichen**

| 1 | Luftansaugkanalsystem |
|---|---|
| 2 | Sammelbehälter |
| 3 | Eintrittsöffnung des Sammelbehälters |
| 4 | Austrittsöffnung des Sammelbehälters |
| 5 | Leiteinrichtung in der vollständig geöffneten Stellung |
| 5' | Leiteinrichtung in einer Zwischenstellung |
| 5" | Leiteinrichtung in einer geschlossenen Stellung |
| 6 | die der Strömung zugewandte Seite der Leiteinrichtung 5 |
| 6' | die der Strömung zugewandte Seite der Leiteinrichtung 5' |
| 6" | die der Strömung zugewandte Seite der Leiteinrichtung 5" |
| 7 | ortsfeste Wandung |
| 8 | Ansaugeintrittskanal |
| 8" | Ansaugeintrittskanal |
| 9 | Drehachse |
| 10 | Außenwand |
| 11 | nicht verstellbares Teilstück des Ansaugkanals |
| | |
| $\alpha$ | Verdrehwinkel |
| a | Schallgeschwindigkeit |
| $l_1$ | Länge des Ansaugkanals |
| $l_{1,max}$ | maximale Länge des Ansaugkanals |
| $l_{1,min}$ | minimale Länge des Ansaugkanals |

$l_2$          Länge des Ansaugeintrittskanals
$l_{2,max}$          maximale Länge des Ansaugeintrittskanals
$l_{2,min}$          minimale Länge des Ansaugeintrittskanals
n          Drehzahl

**Patentansprüche**

1. Brennkraftmaschine mit Luftansaugkanalsystem (1) zur drehzahlabhängigen stufenlosen Variation der Länge $l_1$ der einzelnen Ansaugkanäle, die zur Versorgung der Brennkraftmaschine mit Verbrennungsluft bzw. Frischgemisch einerseits zu einem Zylinder der Brennkraftmaschine führen und andererseits in einen Sammelbehälter (2) des Luftansaugkanalsystems (1) münden,
**dadurch gekennzeichnet, dass**
im Sammelbehälter (2) des Luftansaugkanalsystems (1) eine um eine Drehachse (9) verschwenkbare Leiteinrichtung (5, 5', 5") angeordnet ist, wobei

- die Drehachse (9) der Leiteinrichtung (5, 5', 5") im Bereich der Austrittsöffnung (4) des Sammelbehälters (2) und an der einer Austrittsöffnung (4) des Sammelbehälters (2) zugewandten Seite der Leiteinrichtung (5, 5', 5") angeordnet ist, und
- die der Strömung zugewandte Seite (6, 6', 6") der Leiteinrichtung (5, 5', 5") zusammen mit mindestens einer weiteren im Sammelbehälter (2) vorgesehenen ortsfesten Wandung (7) einen in der Länge $l_2$ variablen Ansaugeintrittskanal (8, 8") ausbildet, so dass durch Verschwenken der Leiteinrichtung (5, 5', 5") die Länge $l_2$ des variablen Ansaugeintrittskanals (8, 8") und damit die Gesamtlänge $l_1$ des Ansaugkanals stufenlos verstellbar ist.

2. Brennkraftmaschine nach Anspruch 1,
**dadurch gekennzeichnet, dass**
die Leiteinrichtung (5, 5', 5") zwischen einer ersten Arbeitsposition, in der der Ansaugkanal eine maximale Länge $l_{1,max}$ aufweist, und einer zweiten Arbeitsposition, in der der Ansaugkanal eine minimale Länge $l_{1,min}$ aufweist, verschwenkbar ist, wobei die Leiteinrichtung (5, 5', 5") beim Wechsel von der ersten Arbeitsposition in die zweite Arbeitsposition einen Winkel $\alpha$ überstreicht mit $\alpha < 90°$.

3. Brennkraftmaschine nach Anspruch 2,
**dadurch gekennzeichnet, dass**
gilt $\alpha < 60°$, vorzugsweise $\alpha < 45°$.

4. Brennkraftmaschine nach Anspruch 2 oder 3,
**dadurch gekennzeichnet, dass**
gilt $\alpha < 30°$.

5. Brennkraftmaschine nach einem der vorherigen Ansprüche,
**dadurch gekennzeichnet, dass**
die Drehachse (9) der Leiteinrichtung (5, 5', 5") im Bereich einer Austrittsöffnung (4) des Sammelbehälters (2) angeordnet ist.

6. Brennkraftmaschine nach einem der vorherigen Ansprüche,
**dadurch gekennzeichnet, dass**
die Leiteinrichtung (5, 5', 5") eine im Wesentlichen längliche Grundform aufweist.

7. Brennkraftmaschine nach einem der vorherigen Ansprüche,
**dadurch gekennzeichnet, dass**
die der Strömung zugewandte Seite (6, 6', 6") der Leiteinrichtung (5, 5', 5") gekrümmt ist.

8. Brennkraftmaschine nach Anspruch 7,
**dadurch gekennzeichnet, dass**
die der Strömung zugewandte Seite (6, 6', 6") der Leiteinrichtung (5, 5', 5") konvex ausgebildet ist.

9. Brennkraftmaschine nach einem der vorherigen Ansprüche,
**dadurch gekennzeichnet, dass**
die Leiteinrichtung (5, 5',5") als Hohlkörper ausgebildet ist.

10. Brennkraftmaschine nach einem der vorherigen Ansprüche,
**dadurch gekennzeichnet, dass**
die Leiteinrichtung (5, 5', 5") mittels der Motorsteuerung drehzahlabhängig steuerbar bzw. verschwenkbar ist.

11. Brennkraftmaschine nach einem der vorherigen Ansprüche,
**dadurch gekennzeichnet, dass**
eine Außenwand (10) des Sammelbehälters (2) die mindestens eine weitere im Sammelbehälter (2) vorgesehene ortsfeste Wandung (7) bildet.

12. Brennkraftmaschine nach einem der vorherigen Ansprüche,
**dadurch gekennzeichnet, dass**
der durch die Leiteinrichtung (5, 5', 5") und der mindestens einen weiteren ortsfesten Wandung (7) gebildete Ansaugeintrittskanal (8, 8") einen im Wesentlichen rechteckförmigen Strömungsquerschnitt aufweist.

13. Brennkraftmaschine nach einem der Ansprüche 1 bis 11,
**dadurch gekennzeichnet, dass**
der durch die Leiteinrichtung (5, 5', 5") und der mindestens einen weiteren ortsfesten Wandung (7) gebildete Ansaugeintrittskanal (8, 8") einen im Wesentlichen ovalen Strömungsquerschnitt aufweist.

**14.** Brennkraftmaschine nach einem der vorherigen Ansprüche,
**dadurch gekennzeichnet, dass**
jeder Zylinder der Brennkraftmaschine einen Ansaugkanal mit einem separaten Sammelbehälter (2) und mit einer in diesem Sammelbehälter (2) angeordneten Leiteinrichtung (5, 5',5") aufweist.

**15.** Brennkraftmaschine nach einem der Ansprüche 1 bis 13,
**dadurch gekennzeichnet, dass**
die Ansaugkanäle der n Zylinder aufweisenden Brennkraftmaschine in einen Gesamtsammelbehälter (2) münden, in dem eine Leiteinrichtung (5, 5', 5") oder n Leiteinrichtungen (5, 5', 5") vorgesehen sind.

**Claims**

**1.** Internal combustion engine with an air intake duct system (1) for rotational-speed-dependent infinite variation of the length $l_1$ of the individual intake ducts, which, to supply the internal combustion engine with combustion air or fresh mixture, on the one hand lead to a cylinder of the internal combustion engine and, on the other hand, open into an air box (2) of the air intake duct system (1),
**characterized in that**
a baffle device (5, 5', 5'') that can be pivoted about an axis (9) of rotation is arranged in the air box (2) of the air intake duct system (1), wherein

- the axis (9) of rotation of the baffle device (5, 5', 5'') is arranged in the region of the outlet opening (4) of the air box (2) and on that side of the baffle device (5, 5', 5") which faces an outlet opening (4) of the air box (2), and
- that side (6, 6', 6'') of the baffle device (5, 5', 5") which faces the flow, together with at least one further, fixed wall (7) provided in the air box (2), forms an intake inlet duct (8, 8'') of variable length $l_2$, thus enabling the length $l_2$ of the variable intake inlet duct (8, 8'') and hence the total length $l_1$ of the intake duct to be varied infinitely by pivoting the baffle device (5, 5', 5").

**2.** Internal combustion engine according to Claim 1,
**characterized in that**
the baffle device (5, 5', 5'') can be pivoted between a first working position, in which the intake duct has a maximum length $l_{1,max}$, and a second working position, in which the intake duct has a minimum length $l_{1,min}$, the baffle device (5, 5', 5") traversing an angle $\alpha$, where $\alpha < 90°$, during the changeover from the first working position to the second working position.

**3.** Internal combustion engine according to Claim 2,
**characterized in that**
$\alpha < 60°$, preferably $\alpha < 45°$.

**4.** Internal combustion engine according to Claim 2 or 3,
**characterized in that**
$\alpha < 30°$.

**5.** Internal combustion engine according to one of the preceding claims,
**characterized in that**
the axis (9) of rotation of the baffle device (5, 5', 5") is arranged in the region of an outlet opening (4) of the air box (2).

**6.** Internal combustion engine according to one of the preceding claims,
**characterized in that**
the baffle device (5, 5', 5") has a substantially elongate basic shape.

**7.** Internal combustion engine according to one of the preceding claims,
**characterized in that**
**that** side (6, 6', 6") of the baffle device (5, 5', 5") which faces the flow is curved.

**8.** Internal combustion engine according to Claim 7,
**characterized in that**
**that** side (6, 6', 6") of the baffle device (5, 5', 5") which faces the flow is of convex design.

**9.** Internal combustion engine according to one of the preceding claims,
**characterized in that**
the baffle device (5, 5', 5") is designed as a hollow body.

**10.** Internal combustion engine according to one of the preceding claims,
**characterized in that**
the baffle device (5, 5', 5") can be controlled or pivoted by means of the engine control system as a function of the rotational speed.

**11.** Internal combustion engine according to one of the preceding claims,
**characterized in that**
an outer wall (10) of the air box (2) forms the at least one further, fixed wall (7) provided in the air box (2).

**12.** Internal combustion engine according to one of the preceding claims,
**characterized in that**
the intake inlet duct (8, 8") formed by the baffle device (5, 5', 5") and the at least one further, fixed wall (7) has a substantially rectangular flow cross section.

**13.** Internal combustion engine according to one of claims 1 to 11,
**characterized in that**
the intake inlet duct (8, 8") formed by the baffle device (5, 5', 5") and the at least one further, fixed wall (7) has a substantially oval flow cross section.

**14.** Internal combustion engine according to one of the preceding claims,
**characterized in that**
each cylinder of the internal combustion engine has an intake duct with a separate air box (2) and with a baffle device (5, 5', 5") arranged in the said air box (2).

**15.** Internal combustion engine according to one of claims 1 to 13,
**characterized in that**
the intake ducts of the internal combustion engine, which has n cylinders, open into an overall air box (2), in which one baffle device (5, 5', 5") or n baffle devices (5, 5', 5'') are provided.

**Revendications**

**1.** Moteur à combustion interne comprenant un système de canaux d'admission d'air (1) pour la variation continue dépendant du régime de la longueur $l_1$ des canaux d'admission individuels, qui conduisent, pour l'alimentation du moteur à combustion interne en air comburant ou en mélange frais d'une part, à un cylindre du moteur à combustion interne, et d'autre part qui débouchent dans un collecteur (2) du système de canaux d'admission d'air (1),
**caractérisé en ce que**
dans le collecteur (2) du système de canaux d'admission d'air (1) est disposé un dispositif de guidage (5, 5', 5") pouvant pivoter autour d'un axe de rotation (9),

- l'axe de rotation (9) du dispositif de guidage (5, 5', 5") étant disposé dans la région de la ou des ouvertures de sortie du collecteur (2) et du côté du dispositif de guidage (5, 5', 5") tourné vers une ouverture de sortie (4) du collecteur (2), et
- le côté (6, 6', 6") du dispositif de guidage (5, 5', 5") tourné vers l'écoulement formant, conjointement avec au moins une autre paroi fixe (7) prévue dans le collecteur (2), un canal d'entrée d'admission (8, 8") de longueur $l_2$ variable, de sorte que par pivotement du dispositif de guidage (5, 5', 5"), la longueur $l_2$ du canal d'entrée d'admission (8, 8") variable et donc la longueur totale $l_1$ du canal d'admission puisse être variée en continu.

**2.** Moteur à combustion interne selon la revendication 1,
**caractérisé en ce que**
le dispositif de guidage (5, 5', 5") peut pivoter entre une première position de travail dans laquelle le canal d'admission présente une longueur maximale $l_{1,max}$ et une deuxième position de travail dans laquelle le canal d'admission présente une longueur minimale $l_{1,min}$, le dispositif de guidage (5, 5', 5"), lors du passage de la première position de travail à la deuxième position de travail, couvrant un angle $\alpha$ avec $\alpha < 90°$.

**3.** Moteur à combustion interne selon la revendication 2,
**caractérisé en ce que**
l'on a $\alpha < 60°$, de préférence $\alpha < 45°$.

**4.** Moteur à combustion interne selon la revendication 2 ou 3,
**caractérisé en ce que**
l'on a $\alpha < 30°$.

**5.** Moteur à combustion interne selon l'une quelconque des revendications précédentes,
**caractérisé en ce que**
l'axe de rotation (9) du dispositif de guidage (5, 5', 5") est disposé dans la région d'une ouverture de sortie (4) du collecteur (2).

**6.** Moteur à combustion interne selon l'une quelconque des revendications précédentes,
**caractérisé en ce que**
le dispositif de guidage (5, 5', 5") présente une forme de base essentiellement allongée.

**7.** Moteur à combustion interne selon l'une quelconque des revendications précédentes,
**caractérisé en ce que**
le côté (6, 6', 6") du dispositif de guidage (5, 5', 5") tourné vers l'écoulement est courbe.

**8.** Moteur à combustion interne selon la revendication 7,
**caractérisé en ce que**
le côté (6, 6', 6") du dispositif de guidage (5, 5', 5") tourné vers l'écoulement est réalisé avec une forme convexe.

**9.** Moteur à combustion interne selon l'une quelconque des revendications précédentes,
**caractérisé en ce que**
le dispositif de guidage (5, 5', 5") est réalisé sous forme de corps creux.

**10.** Moteur à combustion interne selon l'une quelconque des revendications précédentes,
**caractérisé en ce que**

le dispositif de guidage (5, 5', 5") peut être commandé ou pivoté en fonction du régime au moyen de la commande du moteur.

11. Moteur à combustion interne selon l'une quelconque des revendications précédentes,
**caractérisé en ce**
**qu'**une paroi extérieure (10) du collecteur (2) forme l'au moins une autre paroi fixe (7) prévue dans le collecteur (2).

12. Moteur à combustion interne selon l'une quelconque des revendications précédentes,
**caractérisé en ce que**
le canal d'entrée d'admission (8, 8") formé par le dispositif de guidage (5, 5', 5") et l'au moins une autre paroi fixe (7) présente une section transversale d'écoulement essentiellement rectangulaire.

13. Moteur à combustion interne selon l'une quelconque des revendications 1 à 11,
**caractérisé en ce que**
le canal d'entrée d'admission (8, 8") formé par le dispositif de guidage (5, 5', 5") et l'au moins une autre paroi fixe (7) présente une section transversale d'écoulement essentiellement ovale.

14. Moteur à combustion interne selon l'une quelconque des revendications précédentes,
**caractérisé en ce que**
chaque cylindre du moteur à combustion interne présente un canal d'admission avec un collecteur séparé (2) et avec un dispositif de guidage (5, 5', 5") disposé dans ce collecteur (2).

15. Moteur à combustion interne selon l'une quelconque des revendications 1 à 13,
**caractérisé en ce que**
les canaux d'admission du moteur à combustion interne présentant n cylindres débouchent dans un collecteur commun (2) dans lequel sont prévus un dispositif de guidage (5, 5', 5") ou n dispositifs de guidage (5, 5', 5").

Fig.1

**EP 1 630 381 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19528014 A1
- EP 0571894 A1
- US 20030233992 A1
- US 20030177996 A1
- DE 19756332 A1
- DE 19830508 A1